# EUROPEAN PATENT SPECIFICATION

(11) **EP 4 344 907 B1**
(45) Date of publication and mention of the grant of the patent: **02.12.2026**
(21) Application number: 23199326.2
(22) Date of filing: 25.09.2023
(51) Int. Cl.: B60C 23/04

(54) **TIRE LEAK DETECTION METHOD AND MODULAR TIRE PRESSURE LEAK DETECTION SYSTEM**
REIFENLECKERKENNUNGSVERFAHREN UND MODULARES REIFENDRUCKLECKERKENNUNGSSYSTEM
PROCÉDÉ DE DÉTECTION DE FUITE DE PNEU ET SYSTÈME DE DÉTECTION DE FUITE DE PNEU MODULAIRE

(30) Priority: 30.09.2022 US 202263377736 P; 29.08.2023 US 202318457383
(43) Date of publication of application: 03.04.2024
(73) Proprietor: The Goodyear Tire & Rubber Company, Akron, OH 44316 (US)
(72) Inventor: BIRDSALL, Adam William, Hudson, 44236 (US); XUE, Jing, Hudson, 44236 (US); LEDDA, Mirko Aurelio, 6730 Saint-Vincent (BE); MARR, Cary Duane, Canton, 72956 (US); MORRIS, Brian Richard, Canton, 44685 (US); THORN, Micah John, Canton, 4472 (US)
(74) Representative: Leslie, Edward

(56) References cited:
- WO-A1-2022/139786
- CN-A- 114 734 762
- US-A1- 2022 063 357
- US-B2- 9 079 461

## Description

### Field of the Invention

The invention relates generally to tire monitoring systems and methods. More particularly, the invention relates to systems and methods that monitor conditions in a tire, such as tire pressure. Specifically, the invention is directed to a method and to a modular system that determines when a leak of tire pressure occurs and when to issue an alert regarding the leak.

### Background of the Invention

Vehicles include two or more axles that are supported by pneumatic tires. Typically, at least one tire is mounted on each end of each axle. Such tires typically have certain conditions or parameters that are beneficial to monitor during vehicle operation. For example, monitoring the pressure of a pneumatic tire may be helpful in assessing the condition and/or performance of the tire, as a low pressure may indicate that there is an issue with the tire.

To monitor tire pressure, Tire Pressure Monitoring Systems (TPMS) have been developed. A TPMS measures the pressure inside the tire cavity using sensors that are attached to the tire, and typically obtains pressure data in real time from the sensors. Such sensors may be attached to the interior of the tire or to the valve stem of the tire, which is in fluid communication with the tire cavity.

The pressure that is measured by the TPMS may be correlated to a specific tire and transmitted to an electronic control system of the vehicle. The measured tire pressure data may then be employed to improve the function of vehicle systems, such as an anti-lock brake system (ABS), electronic stability control system (ECS), and the like. The measured tire pressure data may also be sent to an operator of the vehicle.

In addition, for fleets of commercial vehicles or passenger vehicles, it is desirable for a manager of the fleet to be informed of tire pressure to make informed decisions about the tires and the vehicle. For example, in the event that a pressure measurement is below a threshold value, an alert may be sent to the fleet manager. The fleet manager may then instruct the vehicle operator to reduce the vehicle speed, direct the vehicle to a service center, and/or schedule an inspection of the tire.

It is desirable to improve the accuracy of pressure measurements in a TPMS, and to determine optimum conditions for the TPMS to generate an alert.

As a result, there is a need in the art for a tire leak detection method and a leak detection system that determines with precision if an air pressure leak in tire is present, and when to issue an alert.

US 2022/0063357 A1 describes a system and method in accordance with the preamble of claim 1.

US 9,079,461 B2 describes a predictive peer-based tire health monitoring system and method.

WO 2022/139786 A1 describes a slow leak detection system for vehicles tires.

CN 114734762 A discloses a tire pressure monitoring method, controller and system.

### Summary of the Invention

The invention relates to a system in accordance with claim 1 and to a method in accordance with claim 14.

Dependent claims refer to preferred embodiments of the invention.

According to an aspect of an exemplary embodiment of the invention, a modular tire pressure leak detection system is provided. The system includes a tire that supports a vehicle and a sensor unit mounted on the tire. The sensor unit detects real-time tire parameters inside the tire and transmits the parameters to a processor. A plurality of modules are in electronic communication with the processor. The plurality of modules include a pre-processing module that receives the parameters and applies a set of operations to generate pressure time series data. The plurality of modules also include a leak detection module that receives the pressure time series data and determines a leak rate of the tire. The plurality of modules further includes a post-processing module that receives the leak rate of the tire and analyzes the leak rate of the tire with determinations from a plurality of conditions. A leak alert is issued by the post-processing module based upon the analysis of the leak rate of the tire and the determinations from the plurality of conditions. The set of operations includes a flatline dropper, which is configured to detect and filter out a flatline in the input data.

### Brief Description of the Drawings

The invention will be described by way of example and with reference to the accompanying drawings, in which:
Figure 1 is a schematic side elevational view of a vehicle with tires that employ an exemplary embodiment of the modular tire pressure leak detection system of the present invention;
Figure 2 is an enlarged perspective view of a tire shown in Figure 1, with a fragmentary representation of the vehicle shown in Figure 1;
Figure 3 is a schematic elevational side view of the vehicle shown in Figure 1 with a representation of data transmission to a cloud-based server and to a display device;
Figure 4 is a flow diagram of an exemplary embodiment of the modular tire pressure leak detection system of the present invention; and
Figure 5 is a graphical representation of an aspect of the modular tire pressure leak detection system shown in Figure 4.

Similar numerals refer to similar parts throughout the drawings.

### Definitions

"Axial" and "axially" means lines or directions that are parallel to the axis of rotation of the tire.

"CAN bus" is an abbreviation for controller area network, as used in reference to the CAN bus system of a vehicle.

"Circumferential" means lines or directions extending along the perimeter of the surface of the annular tread perpendicular to the axial direction.

"Equatorial centerplane (CP)" means the plane perpendicular to the tire's axis of rotation and passing through the center of the tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Lateral" means an axial direction.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"TPMS" is an abbreviation for tire pressure monitoring system.

### Detailed Description of Preferred Embodiments of the Invention

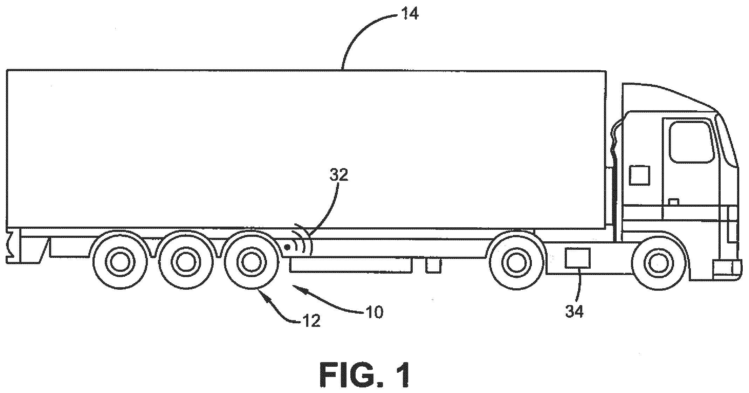

Turning now to Figures 1 through 5, an exemplary embodiment of a modular tire pressure leak detection system 10 of the present invention is indicated. By way of background, as shown in Figure 1, the modular tire pressure leak detection system 10 is employed in association with tires 12 supporting a vehicle 14. While the vehicle 14 is depicted as a commercial truck, the invention is not to be so restricted. The principles of the invention find application in other vehicle categories such as passenger cars, other commercial vehicles, off-the-road vehicles, and the like, in which vehicles may be supported by more or fewer tires. In addition, the invention finds application in a single vehicle 14 or in fleets of vehicles.

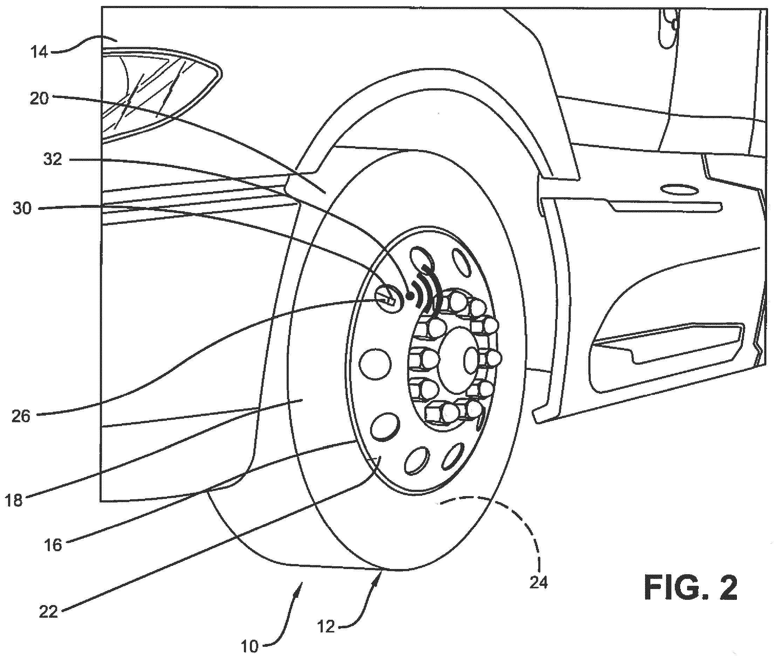

Turning to Figure 2, each tire 12 includes a pair of bead areas 16 (only one shown) and a bead core (not shown) embedded in each bead area. Each one of a pair of sidewalls 18 (only one shown) extends radially outward from a respective bead area 16 to a ground-contacting tread 20. The tire 12 is reinforced by a carcass (not shown) that toroidally extends from one bead area 16 to the other bead area, as known to those skilled in the art. An innerliner (not shown) is formed on the inside surface of the carcass. The tire 12 is mounted on a wheel 22 in a manner known to those skilled in the art and, when mounted, forms an internal cavity 24 that is filled with a pressurized fluid, such as air.

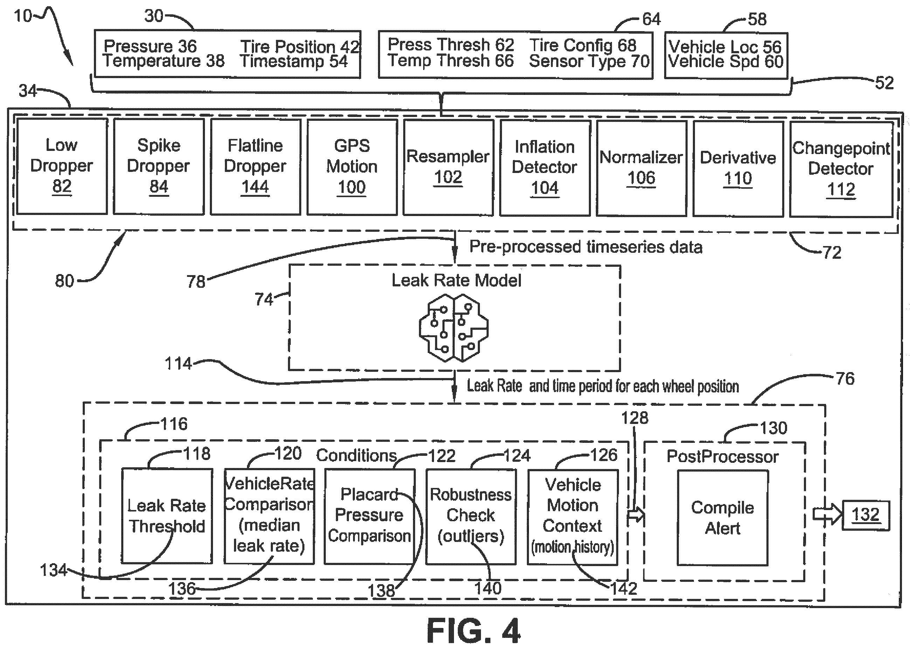

A valve stem 26 is in fluid communication with the cavity 24 and controls air flow into the cavity, as known to those skilled in the art. A sensor unit 30 is mounted on each tire 12 and includes one or more sensors for detecting certain real-time tire parameters inside the tire, such as tire pressure 36 (Figure 4) and temperature 38. Preferably the sensor unit 30 is a tire pressure monitoring system (TPMS) module or sensor, of a type that is commercially available, and may be of any known configuration. The sensor unit 30, referred to as a TPMS sensor, may be mounted on the valve stem 26, as shown in Figure 2. Alternatively, the TPMS sensor 30 may be attached to the interior of the tire 12.

Each TPMS sensor 30 preferably also includes electronic memory capacity for storing identification (ID) information for each tire 12, known as tire ID information. The tire ID information may include a position 42 of the tire 12 on the vehicle 14, tire type, tire construction, and the like. Alternatively, tire ID information may be included in another sensor unit, or in a separate tire ID storage medium, such as a tire ID tag (not shown). With additional reference to Figure 1, the TPMS sensor 30 includes an antenna for wireless transmission 32 of the measured tire pressure and temperature data, as well as tire ID data, to a processor 34.

The processor 34 may be mounted on the vehicle 14 as shown in Figure 1, or may be integrated into the TPMS sensor 30. Alternatively, the processor 34 may be a local processor disposed in a fleet management facility computer. For the purpose of convenience, the processor 34 will be described as being mounted on the vehicle 14, with the understanding that the processor may alternatively be integrated into the TPMS sensor 30 or may alternatively be disposed in a fleet management facility computer. Preferably, the processor 34 is in electronic communication with or integrated into an electronic system of the vehicle 14, such as the vehicle CAN bus system, which is referred to as the CAN bus.

Aspects of the modular tire pressure leak detection system 10 preferably are executed on the processor 34 or on another processor that is accessible through the vehicle CAN bus, which enables input of data from the TMPS sensor 30, as well as input of data from other sensors that are in electronic communication with the CAN bus. In this manner, the modular tire pressure leak detection system 10 enables direct measurement of tire pressure 36 with the TPMS sensor 30, which preferably is transmitted to the processor 34.

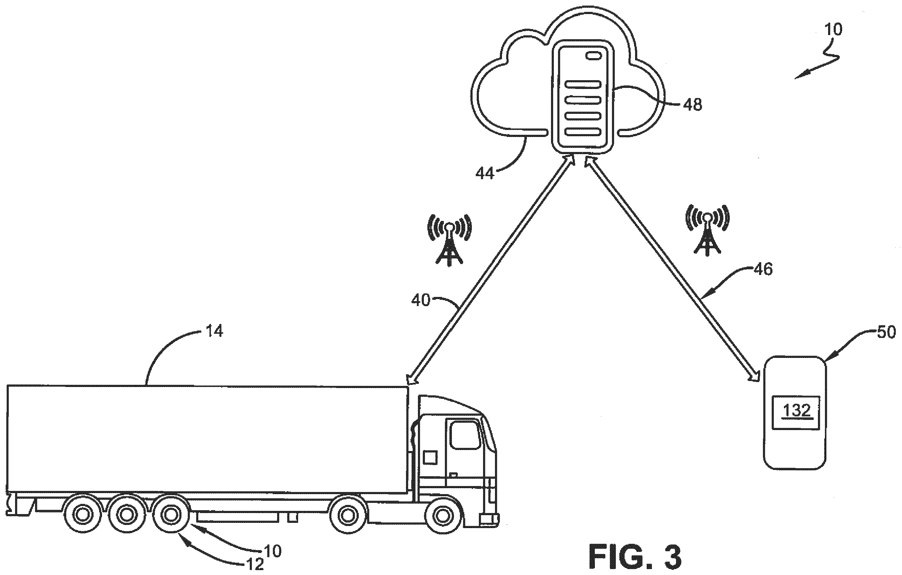

Referring to Figure 3, aspects of the modular tire pressure leak detection system 10 may be executed on a remote processor 48. For example, data such as the measured tire pressure 36, temperature 38, measurement time and ID information may be wirelessly transmitted 40 from the processor 34 and/or the CAN bus on the vehicle 14 to the remote processor 48, which may be a processor in a cloud-based server 44. Alternatively, the remote processor 48 may be disposed in a fleet management facility computer. For the purpose of convenience, the remote processor 48 will be described as being disposed in a cloud-based server 44, with the understanding that the remote processor may alternatively be disposed in a fleet management facility computer. The cloud-based server 44 preferably executes aspects of the modular tire pressure leak detection system 10, which will be described in greater detail below. Output from the system 10 may be wirelessly transmitted 46 to a display device 50.

The display device 50 may include a device that is accessible to a user of the vehicle 14, such as a smartphone, and/or a device that is accessible to a fleet manager, such as a computer.

Turning to Figure 4, the modular tire pressure leak detection system 10 receives input data 52 for each tire 12 and/or the vehicle 14, which is electronically communicated or transmitted to the processor 34. The input data 52 preferably includes the tire pressure 36 from the TPMS sensor 30, the tire temperature 38 from the TPMS sensor, and a measurement time or timestamp 54 from the TPMS sensor. In addition, the input data 52 preferably includes a position of the tire 12 on the vehicle 14, which is known as a tire position 42, from the tire ID information, which may be from the TPMS sensor 30. The input data 52 preferably also includes a location 56 of the vehicle 14, preferably from a global positioning system (GPS) 58 that is in electronic communication with the processor 34, such as through the CAN bus, and a speed 60 of the vehicle 14 from the GPS.

The input data 52 further preferably includes a pressure threshold 62. The pressure threshold 62 may include a placard pressure 138, which is the tire inflation pressure value denoted by a vehicle manufacturer and is typically included on a placard mounted on the vehicle 14 in a location that is visible to a user. The pressure threshold 62 may be stored in an electronic memory 64 that is in electronic communication with the processor 34 or which may be included in the tire ID information. The input data 52 preferably also includes a temperature threshold 66 that is stored in the electronic memory 64. The input data 52 preferably further includes a tire configuration 68 for the vehicle 14 that is stored in the electronic memory 64, and a TPMS sensor type 70 that is stored in the electronic memory or which may be available from the TPMS sensor 30.

The modular tire pressure leak detection system 10 includes three modules that are stored on or are in electronic communication with the processor 34, including a pre-processing module 72, a leak detection module 74, and a post-processing module 76. The pre-processing module 72 receives the input data 52 and applies a set of configurable operations 80 to isolate the most recent trend in measured pressure 36 and generate pressure time series data 78.

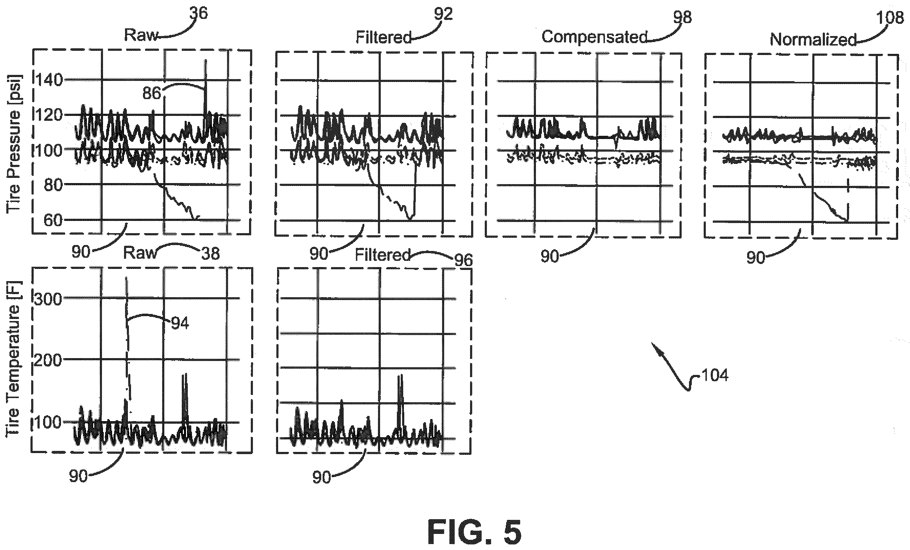

The operations 80 may include a low pressure dropper 82, which drops measured pressure values 36 when the sensor 30 is removed from or not mounted in the tire 12. The operations 80 may also include a spike dropper 84, which removes sudden spikes 86 (Figure 5) in the measured pressure values 36 and spikes 94 in the measured temperature values 38. Specifically, the spike dropper 84 filters out pressure spikes 86 from the measured pressure values 36 over time 90 to generate filtered pressure values 92, and filters out temperature spikes 94 from the measured temperatures values 38 over time to generate filtered temperature values 96.

The operations 80 includes a flatline dropper 144, which detects and filters out a flatline in the input data 52. Because a flatline in data typically corresponds to a malfunction of a sensor, the flatline dropper 144 enables the system 10 to refrain from employing input data 52 from a malfunctioning sensor. The operations 80 may also include a GPS annotator 100, which employs data from the GPS 58 to extract values of measured pressure 36 when the speed of the vehicle 14 is excessive or insufficient, when the acceleration of the vehicle is excessive or insufficient, and/or when the amount of time the vehicle is in motion is insufficient. The GPS annotator 100 may also filter out pressure measurements 36 taken when the vehicle 14 travels outside of a predetermined geographic region, which is known in the art as geofencing, and/or when the vehicle travels at an excessive speed. The operations 80 may also include a resampler 102, which resamples measured data from the TPMS sensor 30 to a uniform cadence, thereby improving the accuracy of the data sets.

The operations 80 may include an inflation detector 104. With additional reference to Figure 5, the inflation detector 104 compensates the filtered pressure values 92 with the filtered temperature values 96, thus generating temperature-compensated pressure measurements 98. The inflation detector 104 may also identify and filter out any one-time step-changes in pressure 36 due to manual pressure adjustment by an operator of the vehicle 14 or a technician, thereby preventing manual, non-leak pressure adjustments from affecting the leak rate determination performed by the leak detection module 74 described below. The operations 80 may also include an operation that smooths the temperature-compensated pressure values 98, preferably using a moving average, to detect inflation of the tire 12.

With continuing reference to Figures 4 and 5, the operations 80 may also include a peer-based pressure normalizer 106. The normalizer 106 compares the measured pressure values 36 for a specific tire 12 to measured pressure values for other tires on the vehicle 14 (Figure 1) to generate a peer-normalized pressure 108. The peer-normalized pressure 108 provides a reference baseline, which may be among all of the tires 12 on a specific vehicle 14, among all of the tires on a specific axle of the vehicle, or among tires having the same position on separate vehicles in a fleet. The peer-normalized pressure 108 enables uniform fluctuations of pressure 36 among tire 12 peers to be determined and deviations from the uniform fluctuations to be highlighted, which may indicate an air pressure leak.

Referring again to Figure 4, the operations 80 may include a derivator 110, which computes derivatives of the measured pressure values 36 to improve detection of pressure change points. The operations 80 may also include a changepoint detector 112, which segments the measured pressure values 36 based on periods of time 90 and detects change points to extract a most recent linear trend from the pressure values.

Once the pre-processing module 72 has applied the configurable operations 80 to isolate the most recent trend in pressure 36, the pre-processing module outputs or generates pressure time series data 78 in which sources of changes in tire pressure, other than tire leaks, have been removed as much as possible.

The pressure time series data 78 input into the leak detection module 74. The leak detection module 74 preferably determines a leak rate 114 of the tire 12 by estimating the slope of the pressure time series data 78. Preferably, the leak detection module 74 includes a robust regressor that is employed as a timeseries model, which extracts the slope of the pressure time series data 78 as the leak rate 114. The leak rate 114 may include both a single-value point estimate of the slope of the pressure time series data 78 and a confidence range. The leak detection module 114 may also report a start and end of a period of time 90 for the input data 52.

The leak rate 114 is input into the post-processing module 76. The post-processing module 76 analyzes the leak rate 114 along with supplementary information, such as information about the state of the vehicle 14, to determine if an alert 132 should be issued. The post-processing module 76 includes a condition evaluator 116 that reviews multiple conditions through the use of sub-modules.

For example, the condition evaluator 116 may include a leak rate threshold sub-module 118 that compares the leak rate 114 to a predetermined low pressure threshold 134. If the leak rate 114 is significantly above the threshold 134, the leak rate threshold sub-module 118 may classify the leak rate as a fast leak. If the leak rate 114 is slightly above the threshold 134, the leak rate threshold sub-module 118 may classify the leak rate as a slow leak. If the leak rate 114 is at or below the threshold 134, the leak rate threshold sub-module 118 may classify the leak rate as no leak.

The condition evaluator 116 may also include a vehicle rate comparison sub-module 120, which compares the leak rate 114 to a median leak rate 136 in a group of tires 12. The median leak rate 136 preferably is a median value of the leak rates 114 for each tire 12 in a selected group of tires, which may be among all of the tires on a specific vehicle 14, among all of the tires on a specific axle of the vehicle, or among tires having the same position on separate vehicles in a fleet. The vehicle rate comparison sub-module 120 compiles the median leak rate 136 and suppresses the alert 132 if the leak rate 114 is similar to the median leak rate, as a pressure drop is likely due to driving or temperature conditions rather than a leak.

The condition evaluator 116 may include a placard pressure comparison sub-module 122. As described above, the placard pressure 138 is the tire inflation pressure value denoted by a vehicle manufacturer, which is typically included on a placard mounted on the vehicle 14 in a location that is visible to a user. Because the placard pressure 138 may be lower than the low pressure threshold 134, the placard pressure comparison sub-module 122 compares the measured pressure 36 for the tire 12 to the placard pressure and suppresses the alert 132 if the measured pressure is similar to the placard pressure.

The condition evaluator 116 may also include a robustness check sub-module 124. The robustness check sub-module 124 reviews the measured pressure data 36 to determine whether the leak rate 114 determined by the leak detection module 74 module may be disproportionately influenced by a small number of individual observations that sit outside the main trend, which may be referred to as outliers 140. When the outliers 140 exceed a predetermined amount or threshold, the robustness check sub-module 124 suppresses the alert 132.

The condition evaluator 116 may include a vehicle motion context sub-module 126. The vehicle motion context sub-module 126 checks a motion history 142 of the vehicle 14 to determine if the leak rate 114 is consistent with the vehicle motion history. For example, if the motion history 142 indicates typical movement of the vehicle 14, an alert 132 may not be suppressed. Alternatively, if there is a sudden change in the leak rate 114 for a vehicle 14 that has been stationary for a long period of time, the leak may be inconsistent with the motion history 142 of the vehicle, and the vehicle motion context sub-module 126 suppresses the alert 132.

Determinations 128 from the sub-modules of the condition evaluator 116 are input into a postprocessor 130 of the post-processing module 76. The postprocessor 130 compares the determinations 128 from each sub-module 118, 120, 122, 124, and 126 to determine if the alert 132 should be issued. For example, if the leak rate threshold sub-module 118 classifies the leak rate 114 as a fast leak or a slow leak, one determination 128 is to issue a corresponding fast or slow leak alert 132. However, if the leak rate 114 is similar to the median leak rate 136, a determination 128 from the vehicle rate comparison sub-module 120 may be to suppress the alert 132.

In addition, if the measured pressure 36 for the tire 12 is similar to the placard pressure 138, a determination 128 from the placard pressure comparison sub-module 122 may be to suppress the alert 132. Moreover, if the outliers 140 exceed a predetermined amount or threshold, a determination 128 from the robustness check sub-module 124 may be to suppress the alert 132. Also, if the leak rate 114 is inconsistent with the motion history 142 of the vehicle 14, a determination 128 from the vehicle motion context sub-module 126 may be to suppress the alert 132.

Once the postprocessor 130 compares the determinations 128 and finds that an alert should not be suppressed, a fast or slow leak alert 132 that corresponds to the leak rate 114 is issued by the post-processing module 76. Returning to Figure 3, when the alert 132 is issued, it may be wirelessly transmitted 46 from the cloud-based server 44 to the display device 50, which is accessible to a user of the vehicle 14 or to a fleet manager. A fleet manager viewing the display device 50 may take preventative measures, such as instructing a vehicle operator to slow the vehicle 14 down, direct the vehicle to a service center, and/or schedule the vehicle for maintenance. A user viewing the display device 50 may also take action based on the alert 132.

In this manner, the modular tire pressure leak detection system 10 of the present invention employs the pre-processing module 72, the leak detection module 74, and the post-processing module 76 to determine when a leak of pneumatic pressure from a tire 12 occurs and when to issue an alert 132 regarding the leak.

The present invention also includes a method of detecting a tire pressure leak. The method includes steps in accordance with the description that is presented above and shown in Figures 1 through 5.

It is to be understood that the structure of the above-described modular tire pressure leak detection system 10 may be altered or rearranged, or components or steps known to those skilled in the art omitted or added, without affecting the overall concept or operation of the invention. For example, the system 10 has been described with reference to valve stem mounted TPMS sensors, but finds application in other types of TPMS sensors that are known to those skilled in the art. In addition, the system 10 may be applied to the detection of a pressure leak in each tire 12 mounted on one vehicle 14, or to tires that are mounted on multiple vehicles in a fleet.

## Claims

1. A modular tire pressure leak detection system, the system (10) comprising:
a tire (12) supporting a vehicle (14) or for supporting a vehicle (14);
a sensor unit (30) mounted on the tire (12), the sensor unit (30) being configured for detecting real-time tire parameters inside the tire (12) and for transmitting the parameters to a processor (34);
a plurality of modules in electronic communication with the processor (34), the plurality of modules including:
a pre-processing module (72), the pre-processing module (72) being configured for receiving the parameters and applying a set of operations to generate pressure time series data;
a leak detection module (74), the leak detection module (74) being configured for receiving the pressure time series data and determining a leak rate of the tire (12); and
a post-processing module (76), the post-processing module (76) being configured for receiving the leak rate of the tire (12) and for analyzing the leak rate of the tire with determinations from a plurality of conditions; and
wherein the post-processing module (76) is further configured to issue a leak alert (132) upon the analysis of the leak rate of the tire (12) and the determinations from the plurality of conditions;
**characterized in that** the set of operations includes a flatline dropper (144), which is configured to detect and filter out a flatline in the input data (52).

2. The modular tire pressure leak detection system of claim 1, wherein the real-time parameters include a measured pressure of the tire, a measured temperature of the tire, and a measurement time; and/or wherein the real-time parameters comprise identification information for the tire preferably including a position of the tire (12) on the vehicle (14).

3. The modular tire pressure leak detection system of claim 1 or 2, further comprising at least one of a location of the vehicle (14) and a speed of the vehicle (14) that are input into the pre-processing module (72); and/or comprising at least one of a tire pressure threshold, a tire temperature threshold, a tire configuration for the vehicle, and an identification of a type of the sensor unit (30) that are input into the pre-processing module (72).

4. The modular tire pressure leak detection system of at least one of the previous claims, wherein in the set of operations includes a low pressure dropper (82) that is configured to drop values of a measured pressure of the tire (12) when the sensor unit (30) is not mounted on the tire (12).

5. The modular tire pressure leak detection system of at least one of the previous claims, wherein the set of operations includes a spike dropper (84) that is configured to remove spikes in values of a measured pressure of the tire (12) to generate filtered pressure values and/or to remove spikes in values of a measured temperature of the tire (12) to generate filtered temperature values.

6. The modular tire pressure leak detection system of at least one of the previous claims, wherein the set of operations includes an inflation detector (104) that is configured to compensate filtered pressure values with filtered temperature values to generate temperature-compensated pressure measurements.

7. The modular tire pressure leak detection system of at least one of the previous claims, wherein the set of operations includes a GPS annotator (100) that is configured to extract values of a measured pressure related to at least one of a speed of the vehicle (14), an acceleration of the vehicle (14), an amount of time the vehicle (14) is in motion, and a geographic region in which the vehicle (14) travels; and/or wherein the set of operations includes a resampler (102) that is configured to resample real-time tire parameters from the sensor unit (30).

8. The modular tire pressure leak detection system of at least one of the previous claims, wherein the set of operations includes a peer-based pressure normalizer (106) that is configured to provide a reference baseline of the real-time tire parameters among a group of tires (12); and/or wherein the set of operations includes a derivator (110) that is configured to compute derivatives of measurd pressure values to improve detection of pressure change points.

9. The modular tire pressure leak detection system of at least one of the previous claims, wherein the set of operations includes a changepoint detector (112) that is configured to segment measured pressure values based on periods of time and detects change points.

10. The modular tire pressure leak detection system of at least one of the previous claims, wherein the leak detection module (74) is configured to extract a slope of the pressure time series data as the leak rate.

11. The modular tire pressure leak detection system of at least one of the previous claims, wherein the post-processing module (76) includes a condition evaluator (116) that includes a leak rate threshold sub-module (118) which is configured to compare the leak rate to a predetermined low pressure threshold to classify the leak rate as a fast leak or a slow leak; and/or wherein the post-processing module (76) includes a condition evaluator (116) that includes a vehicle rate comparison sub-module which is configured to compare the leak rate to a median leak rate in a group of tires (12) and to suppress the leak alert (132) if the leak rate is similar to the median leak rate.

12. The modular tire pressure leak detection system of at least one of the previous claims, wherein the post-processing module (76) includes a condition evaluator (116) that includes a placard pressure comparison sub-module (122) which is configured to compare a measured pressure for the tire (12) to a placard pressure and to suppress the leak alert (132) if the measured pressure is similar to the placard pressure; and/or wherein the post-processing module (76) includes a condition evaluator (116) that includes a robustness check sub-module (124) which is configured to review measured pressure data and to suppress the leak alert (132) when outliers in the measured pressure data exceed a predetermined threshold.

13. The modular tire pressure leak detection system of at least one of the previous claims, wherein the post-processing module (76) includes a condition evaluator (116) that includes a vehicle motion context sub-module (126) which is configured to check a motion history of the vehicle (14) and to suppress the leak alert (132) when the leak rate is inconsistent with the motion history of the vehicle (14); and/or wherein the post-processing module (76) includes a postprocessor (130) that is configured to compare the determinations as generated by sub-modules in the post-processing module (76) to determine whether to issue the leak alert.

14. A tire leak detection method, the method comprising:
providing a tire (12) supporting a vehicle (14) or for supporting a vehicle (14);
providing a sensor unit (30) mounted on the tire (12), the sensor unit (30) operationally detecting real-time tire parameters inside the tire (14) and transmitting the parameters to a processor (34);
providing a plurality of modules in electronic communication with the processor (34), the plurality of modules including:
a pre-processing module (72), the pre-processing module (72) operationally receiving the parameters and applying a set of operations to generate pressure time series data;
a leak detection module (74), the leak detection module (74) operationally receiving the pressure time series data and determining a leak rate of the tire (12); and
a post-processing module (76), the post-processing module (76) operationally receiving the leak rate of the tire (12) and analyzing the leak rate of the tire (12) with determinations from a plurality of conditions;
wherein the post-processing module (76) issues a leak alert (132) upon the analysis of the leak rate of the tire (12) and the determinations from the plurality of conditions;
**characterized in that** the set of operations includes a flatline dropper (144), which detects and filters out a flatline in the input data (52).

15. The method of claim 14, wherein the method operates by using a modular tire pressure leak detection system according to at least one of the claims 1 to 13.

## Patentansprüche

1. Modulares System zur Erkennung von Druckverlusten an einem Reifen, wobei das System (10) umfasst:
einen Reifen (12), der ein Fahrzeug (14) trägt oder dazu bestimmt ist, ein Fahrzeug (14) zu tragen;
eine Einheit in Form eines Sensors (30), die an dem Reifen (12) montiert ist; wobei die Einheit in Form eines Sensors (30) derart ausgestaltet ist, dass sie Parameter des Reifens in Echtzeit innerhalb des Reifens (12) erfasst, und diese Parameter an einen Prozessor (34) überträgt;
eine Anzahl von Modulen, die mit dem Prozessor (34) in elektronischer Verbindung stehen; wobei die oben genannten Module Folgendes einschließen:
ein Modul für die Vorverarbeitung (72); wobei das Modul für die Vorverarbeitung (72) derart ausgestaltet ist, dass es die Parameter empfängt und eine Reihe von Operationen durchführt, um chronologische Zeitreihendaten des Drucks zu erzeugen;
ein Modul für die Erkennung einer Leckage (74); wobei das Modul für die Erkennung einer Leckage (74) derart ausgestaltet ist, dass es die chronologischen Zeitreihendaten des Drucks empfängt und die Leckagerate des Reifens (12) bestimmt; und
ein Modul für die Weiterverarbeitung (76); wobei das Modul für die Weiterverarbeitung (76) derart ausgestaltet ist, dass es die Leckagerate des Reifens (12) empfängt und die Leckagerate des Reifens mit Bestimmungen auf der Basis von einer Reihe von Bedingungen analysiert; und
wobei das Modul für die Weiterverarbeitung (76) ferner derart ausgestaltet ist, dass es infolge der Analyse der Leckagerate des Reifens (12) und der Bestimmungen auf der Basis von einer Reihe von Bedingungen einen Leckagealarm (132) auslöst;
**dadurch gekennzeichnet, dass** die Reihe von Operationen einen Signalstillstand-Filter (144) einschließt, der derart ausgestaltet ist, dass er einen Signalstillstand in den Eingabedaten (52) erkennt und herausfiltert.

2. Modulares System zur Erkennung von Druckverlusten an einem Reifen nach Anspruch 1, wobei die in Echtzeit erfassten Parameter einen gemessenen Druck des Reifens, eine gemessene Temperatur des Reifens und eine Messzeit einschließen; und/oder wobei die in Echtzeit erfassten Parameter Identifikationsinformationen für den Reifen umfassen, die vorzugsweise eine Position des Reifens (12) an dem Fahrzeug (14) einschließen.

3. Modulares System zur Erkennung von Druckverlusten an einem Reifen nach Anspruch 1 oder 2, das ferner mindestens ein Element umfasst, das aus einer Lokalisierung des Fahrzeugs (14) und einer Geschwindigkeit des Fahrzeugs (14) ausgewählt ist, das in das Modul für die Vorverarbeitung (72) eingegeben wird; und/oder das mindestens ein Element umfasst, das aus einem Schwellenwert für den Druck des Reifens, einem Schwellenwert für die Temperatur des Reifens, einer Konfiguration des Reifens für das Fahrzeug sowie einer Identifikation eines Typs der Einheit in Form eines Sensors (30) ausgewählt ist, das in das Modul für die Vorverarbeitung (72) eingegeben wird.

4. Modulares System zur Erkennung von Druckverlusten an einem Reifen nach mindestens einem der vorstehenden Ansprüche, wobei die Reihe von Operationen ein Modul für die Erkennung eines Druckabfalls (82) einschließt, das derart ausgestaltet ist, dass es Werte des Drucks des Reifens (12) erkennt, wenn die Einheit in Form eines Sensors (30) nicht an dem Reifen (12) montiert ist.

5. Modulares System zur Erkennung von Druckverlusten an einem Reifen nach mindestens einem der vorstehenden Ansprüche, wobei die Reihe von Operationen einen Druckspitzen-Filter (84) einschließt, der derart ausgestaltet ist, dass er ein Ausschließen der Spitzen in den gemessenen Werten des Reifens (12) derart vornimmt, dass gefilterte Druckwerte erzeugt werden, und/oder dass er ein Ausschließen der Spitzen in den Werten einer gemessenen Temperatur des Reifens (12) derart vornimmt, dass gefilterte Temperaturwerte erzeugt werden.

6. Modulares System zur Erkennung von Druckverlusten an einem Reifen nach mindestens einem der vorstehenden Ansprüche, wobei die Reihe von Operationen einen Aufblasdetektor (104) einschließt, der derart ausgestaltet ist, dass er eine Kompensation der gefilterten Druckwerte mit gefilterten Temperaturwerten derart vornimmt, dass temperaturkompensierte Druckmesswerte erzeugt werden.

7. Modulares System zur Erkennung von Druckverlusten an einem Reifen nach mindestens einem der vorstehenden Ansprüche, wobei die Reihe von Operationen ein Modul für die GPS-Annotation (100) einschließt, der derart ausgestaltet ist, dass er gemessene Druckwerte extrahiert, mit mindestens einem Element das mit einer Fahrzeuggeschwindigkeit (14), einer Fahrzeugbeschleunigung (14), einer Zeitspanne, die dem In-Bewegung des Fahrzeugs (14) Setzen entspricht, sowie einem geografischen Bereich, in dem sich das Fahrzeug (14) bewegt, verbunden ist; und/oder wobei die Reihe von Operationen ein Modul für eine Neuabtastung (102) einschließt, das derart ausgestaltet ist, dass es eine Neuabtastung der in Echtzeit erfasste Parameter des Reifens ausgehend von der als Sensor fungierenden Einheit (30) vornimmt.

8. Modulares System zur Erkennung von Druckverlusten an einem Reifen nach mindestens einem der vorstehenden Ansprüche, wobei die Reihe von Operationen ein Modul für die peerbasierte Drucknormalisierung (106) einschließt, das derart ausgestaltet ist, dass es eine Referenzbasis für die in Echtzeit erfassten Parameter des Reifens aus einer Gruppe von Reifen (12) bereitstellt; und/oder wobei die Reihe von Operationen ein Differenzierglied (110) einschließt, das derart ausgestaltet ist, dass es Ableitungen der gemessenen Druckwerte derart berechnet, dass die Erkennung von Druckänderungspunkten verbessert wird.

9. Modulares System zur Erkennung von Druckverlusten an einem Reifen nach mindestens einem der vorstehenden Ansprüche, wobei die Reihe von Operationen ein Modul für die Erkennung von Änderungspunkten (112) einschließt, das derart ausgestaltet ist, dass es eine Segmentierung der gemessenen Druckwerte auf Basis von Zeitspannen sowie eine Erkennung von Änderungspunkten vornimmt.

10. Modulares System zur Erkennung von Druckverlusten an einem Reifen nach mindestens einem der vorstehenden Ansprüche, wobei das Modul für die Erkennung einer Leckage (74) derart ausgestaltet ist, dass es aus den chronologischen Zeitdruckdaten eine Steigung extrahiert, die als Leckagerate dient.

11. Modulares System zur Erkennung von Druckverlusten an einem Reifen nach mindestens einem der vorstehenden Ansprüche, wobei das Modul für die Weiterverarbeitung (76) ein Modul für eine Zustandsauswertung (116), das ein Untermodul für den Leckagerate-Schwellenwert (118) einschließt, das derart ausgestaltet ist, dass es einen Vergleich der Leckagerate mit einem vorbestimmten Niederdruck-Schwellenwert vornimmt, um die Leckagerate als schnelle oder langsame Leckage zu klassifizieren; und/wobei das Modul für die Weiterverarbeitung (76) ein Modul für eine Zustandsauswertung (116) einschließt, das ein Fahrzeugrate-Vergleichs-Untermodul einschließt, das derart ausgestaltet ist, dass es einen Vergleich der Leckagerate mit einer medianen Leckagerate in einer Reifengruppe (12) vornimmt, und eine Unterdrückung des Leckagealarms (132) vornimmt, wenn die Leckagerate der medianen Leckagerate entspricht.

12. Modulares System zur Erkennung von Druckverlusten an einem Reifen nach mindestens einem der vorstehenden Ansprüche, wobei das Modul für die Weiterverarbeitung (76) ein Modul für die Zustandsauswertung (116) einschließt, Modulares System zur Erkennung von Druckverlusten eines Reifens nach mindestens einem der vorstehenden Ansprüche, wobei das Modul für die Weiterverarbeitung (76) ein Modul für eine Zustandsauswertung (116) einschließt, das ein Modul zum Vergleich mit dem Sollwertdruck (122) umfasst, das derart ausgestaltet ist, dass es einen Vergleich eines für den Reifen (12) gemessenen Drucks mit einem Sollwert und ein Unterdrücken des Leckagealarm (132) vornimmt, wenn der gemessene Druck dem Sollwert entspricht; und/oder wobei das Modul für die Weiterverarbeitung (76) ein Modul für eine Zustandsauswertung (116) einschließt, das ein Untermodul für die Robustheitsprüfung (124) einschließt, das derart ausgestaltet ist, dass es eine Überprüfung der gemessenen Druckdaten und ein Unterdrücken des Leckagealarm (132) vornimmt, wenn abnormale Werte in den gemessenen Druckdaten einen vorbestimmten Schwellenwert überschreiten.

13. Modulares System zur Erkennung von Druckverlusten an einem Reifen nach mindestens einem der vorstehenden Ansprüche, wobei das Modul für die Weiterverarbeitung (76) ein Modul für die Zustandsauswertung (116) einschließt, das ein Untermodul für den Fahrzeugbewegungskontext (126) umfasst, das derart ausgestaltet ist, dass es eine Überprüfung des Bewegungsverlaufs des Fahrzeugs (14) vornimmt und den Leckagealarm (312) unterdrückt, wenn die Leckagerate im Hinblick auf den Bewegungsverlauf des Fahrzeugs (14) inkonsistent ist; und/oder wobei das Modul für die Weiterverarbeitung (76) einen Nachprozessor (130) einschließt, der derart ausgestaltet ist, dass er einen Vergleich der von den Untermodulen in dem Modul für die Weiterverarbeitung (76) erzeugten Bestimmungen vornimmt, um zu bestimmen, ob der Leckagealarm ausgelöst werden soll.

14. Verfahren zur Erkennung von Druckverlusten an einem Reifen, wobei das Verfahren das Folgende umfasst:
das Bereitstellen eines Reifens (12), der ein Fahrzeug (14) trägt oder dazu bestimmt ist, ein Fahrzeug (14) zu tragen;
das Bereitstellen einer Einheit in Form eines Sensors (30), die an dem Reifen (12) montiert ist; wobei die Einheit in Form eines Sensors (30) in funktionsfähiger Weise Parameter des Reifens in Echtzeit innerhalb des Reifens (12) erfasst, und diese Parameter an einen Prozessor (34) überträgt;
das Bereitstellen einer Anzahl von Modulen, die mit dem Prozessor (34) in elektronischer Verbindung stehen; wobei die Anzahl von Modulen Folgendes einschließen:
ein Modul für die Vorverarbeitung (72); wobei das Modul für die Vorverarbeitung (72) in funktionsfähiger Weise die Parameter empfängt, und eine Reihe von Operationen durchführt, um chronologische Zeitreihendaten des Drucks zu erzeugen;
ein Modul für die Erkennung einer Leckage (74); wobei das Modul für die Erkennung einer Leckage (74) in funktionsfähiger Weise die chronologischen Zeitreihendaten des Drucks empfängt, und die Leckagerate des Reifens (12) bestimmt; und
ein Modul für die Weiterverarbeitung (76); wobei das Modul für die Weiterverarbeitung (76) in funktionsfähiger Weise die Leckagerate des Reifens (12) empfängt, und die Leckagerate des Reifens mit Bestimmungen auf der Basis von einer Reihe von Bedingungen analysiert; und
wobei das Modul für die Weiterverarbeitung (76) infolge der Analyse der Leckagerate des Reifens (12) und der Bestimmungen auf der Basis von einer Reihe von Bedingungen einen Leckagealarm (132) auslöst;
**dadurch gekennzeichnet, dass** die Reihe von Operationen einen Signalstillstand-Filter (144) einschließt, der derart ausgestaltet ist, dass er einen Signalstillstand in den Eingabedaten (52) erkennt und herausfiltert.

15. Verfahren nach Anspruch 14, wobei das Verfahren derart durchgeführt wird, dass es ein modulares System zur Erkennung von Druckverlusten an einem Reifen nach mindestens einem der Ansprüche 1 bis 13 verwendet.

## Revendications

1. Système modulaire pour la détection de fuites de pression d'un bandage, dans lequel le système (10) comprend :
un bandage (12) qui supporte un véhicule (14) ou qui est destiné à supporter un véhicule (14) ;
une unité faisant office de capteur (30) qui est montée sur le bandage (12) ; dans lequel l'unité faisant office de capteur (30) est configurée d'une manière telle qu'elle détecte des paramètres du bandage pris en temps réel au sein du bandage (12) et qu'elle transmet les paramètres à un processeur (34) ;
un certain nombre de modules qui sont mis en communication électronique avec le processeur (34) ; dans lequel lesdits plusieurs modules englobent :
un module de traitement préalable (72) ; dans lequel le module de traitement préalable (72) est configuré d'une manière telle qu'il reçoit les paramètres et qu'il met en œuvre une gamme d'opérations dans le but de générer des données temporelles chronologiques de pression ;
un module de détection de fuite (74) ; dans lequel le module de détection de fuite (74) est configuré d'une manière telle qu'il reçoit les données temporelles chronologiques de pression et qu'il détermine un débit de fuite du bandage (12) ; et
un module de traitement ultérieur (76) ; dans lequel le module de traitement ultérieur (76) est configuré d'une manière telle qu'il reçoit le débit de fuite du bandage (12) et qu'il analyse le débit de fuite du bandage avec des déterminations à partir d'un certain nombre de conditions ; et
dans lequel le module de traitement ultérieur (76) est en outre configuré d'une manière telle qu'il déclenche une alerte de fuite (132) suite à l'analyse du débit de fuite du bandage (12) et sur base des déterminations à partir d'un certain nombre de conditions ;
**caractérisé en ce que** la gamme d'opérations englobe un module d'élimination de valeurs figées (144) qui est configuré d'une manière telle qu'il détecte et élimine par filtration une valeur figée dans les données d'entrée (52).

2. Système modulaire pour la détection de fuites de pression d'un bandage selon la revendication 1, dans lequel les paramètres pris en temps réel englobent une pression mesurée du bandage, une température mesurée du bandage, et un de temps de mesure ; et/ou dans lequel les paramètres pris en temps réel comprennent des informations d'identification pour le bandage, qui englobent de préférence une position du bandage (12) sur le véhicule (14).

3. Système modulaire pour la détection de fuites de pression d'un bandage selon la revendication 1 ou 2, qui comprend en outre au moins un élément choisi parmi une localisation du véhicule (14) et une vitesse du véhicule (14) qui est entré dans le module de traitement préalable (72) ; et/ou qui comprend au moins élément qui est choisi parmi un seuil de la pression du bandage, un seuil de la température du bandage, une configuration du bandage pour le véhicule, ainsi qu'une identification d'un type d'unité faisant office de capteur (30) qui est entré dans le module de traitement préalable (72).

4. Système modulaire pour la détection de fuites de pression d'un bandage selon au moins une des revendications précédentes, dans lequel la gamme d'opérations englobe une unité de détection d'une chute de pression (82) qui est configurée d'une manière telle qu'elle détecte des valeurs d'une pression mesurée du bandage (12) lorsque l'unité faisant office de capteur (30) n'est pas montée sur le bandage (12).

5. Système modulaire pour la détection de fuites de pression d'un bandage selon au moins une des revendications précédentes, dans lequel la gamme d'opérations englobe un module de suppression des pics (84) qui est configuré d'une manière telle qu'il procède à une suppression des pics dans des valeurs d'une pression mesurée du bandage (12) dans le but de générer des valeurs de pression qui ont été filtrées et/ou qu'il élimine des pics dans des valeurs d'une température mesurée du bandage (12) dans le but de générer des valeurs de température qui ont été filtrées.

6. Système modulaire pour la détection de fuites de pression d'un bandage selon au moins une des revendications précédentes, dans lequel la gamme d'opérations englobe un détecteur de gonflage (104) qui est configuré d'une manière telle qu'il procède à une compensation des valeurs de pression qui ont été filtrées avec des valeurs de température qui ont été filtrées dans le but de générer des mesures de pression qui ont compensées avec la température.

7. Système modulaire pour la détection de fuites de pression d'un bandage selon au moins une des revendications précédentes, dans lequel la gamme d'opérations englobe un module d'annotation GPS (100) qui est configuré d'une manière telle qu'il procède à une extraction des valeurs d'une pression mesurée en lien avec au moins un élément qui est choisi parmi une vitesse du véhicule (14), une accélération du véhicule (14), un laps de temps qui correspond à la mise en mouvement du véhicule (14), et une zone géographique dans laquelle se déplace le véhicule (14) ; et/ou dans lequel la gamme d'opérations englobe un module de rééchantillonnage (102) qui est configuré d'une manière telle qu'il procède à un rééchantillonnage des paramètres du bandage qui ont été pris en temps réel, à partir de l'unité faisant office de capteur (30).

8. Système modulaire pour la détection de fuites de pression d'un bandage selon au moins une des revendications précédentes, dans lequel la gamme d'opérations englobe un module de normalisation de pression par comparaison entre pairs (106) qui est configuré d'une manière telle qu'il procure une ligne de base de référence des paramètres du bandage pris en temps réel à partir d'un groupe de bandages (12) ; et/ou dans lequel la gamme d'opérations englobe un module de dérivation (110) qui est configuré d'une manière telle qu'il calcule des dérivées des valeurs de pression qui ont été mesurées dans le but d'améliorer la détection de points de changement de pression.

9. Système modulaire pour la détection de fuites de pression d'un bandage selon au moins une des revendications précédentes, dans lequel la gamme d'opérations englobe un module de détection de points de changement (112) qui est configuré d'une manière telle qu'il procède à une segmentation de valeurs de pression qui ont été mesurées en se basant sur des laps de temps et qu'il procède à une détection de points de changement.

10. Système modulaire pour la détection de fuites de pression d'un bandage selon au moins une des revendications précédentes, dans lequel le module de détection de fuite (74) est configuré d'une manière telle qu'il procède à l'extraction d'une pente des données temporelles chronologiques de pression au titre pour faire office du débit de fuite.

11. Système modulaire pour la détection de fuites de pression d'un bandage selon au moins une des revendications précédentes, dans lequel le module de traitement ultérieur (76) englobe un module d'évaluation d'une condition (116) qui englobe un sous-module de seuil de débit de fuite (118) qui est configuré d'une manière telle qu'il procède à une comparaison du débit de fuite à un seuil de basse pression qui a été prédéterminé dans le but de classer le débit de fuite comme étant un débit rapide ou un débit lent ; et/ dans lequel le module de traitement ultérieur (76) englobe un module d'évaluation d'une condition (116) qui englobe un sous-module de comparaison de débit de véhicule qui est configuré d'une manière telle qu'il procède à une comparaison du débit de fuite à un débit de fuite médian dans un groupe de bandages (12) et qu'il procède à une suppression de l'alerte de fuite (132) lorsque le débit de fuite est similaire au débit de fuite médian.

12. Système modulaire pour la détection de fuites de pression d'un bandage selon au moins une des revendications précédentes, dans lequel le module de traitement ultérieur (76) englobe un module d'évaluation d'une condition (116) qui englobe un sous-module de comparaison à la pression de consigne (122) qui est configuré d'une manière telle qu'il procède à une comparaison d'une pression qui a été mesurée pour le bandage (12) à une pression de consigne et qu'il procède à une suppression de l'alerte de fuite (132) lorsque pression qui a été mesurée est similaire à la pression de consigne ; et/ou dans lequel le module de traitement ultérieur (76) englobe un module d'évaluation d'une condition (116) qui englobe un sous-module de la vérification de la robustesse (124) qui est configuré d'une manière telle qu'il procède à une révision des données de pression qui ont été mesurées et qu'il procède à une suppression de l'alerte de fuite (312) lorsque des valeurs aberrantes dans les données de pression qui ont été mesurées dépassent un seuil prédéterminé.

13. Système modulaire pour la détection de fuites de pression d'un bandage selon au moins une des revendications précédentes, dans lequel le module de traitement ultérieur (76) englobe un module d'évaluation d'une condition (116) qui englobe un sous-module de contexte de mouvement du véhicule (126) qui est configuré d'une manière telle qu'il procède à une vérification d'un historique du mouvement du véhicule (14) et qu'il procède à une suppression de l'alerte de fuite (312) lorsque le débit de fuite est incohérent par rapport à l'historique du mouvement du véhicule (14) ; et/ou dans lequel le module de traitement ultérieur (76) englobe un postprocesseur (130) qui est configuré d'une manière telle qu'il procède à une comparaison des déterminations telles qu'elles ont été générées par les sous-modules dans le module de traitement ultérieur (76) afin de déterminer le fait de savoir s'il y a lieu de déclencher l'alarme de fuite ou non.

14. Procédé de détection de fuites d'un bandage, dans lequel le procédé comprend le fait de :
procurer un bandage (12) qui supporte un véhicule (14) ou qui est destiné à supporter un véhicule (14) ;
procurer une unité faisant office de capteur (30) qui est montée sur le bandage (12) ; dans lequel l'unité faisant office de capteur (30), de manière opérationnelle, détecte des paramètres du bandage pris en temps réel au sein du bandage (12) et transmet les paramètres à un processeur (34) ;
procurer un certain nombre de modules qui sont mis en communication électronique avec le processeur (34) ; dans lequel lesdits plusieurs modules englobent :
un module de traitement préalable (72) ; dans lequel le module de traitement préalable (72), de manière opérationnelle, reçoit les paramètres et met en œuvre une gamme d'opérations dans le but de générer des données temporelles chronologiques de pression ;
un module de détection de fuite (74) ; dans lequel le module de détection de fuite (74), de manière opérationnelle, reçoit les données temporelles chronologiques de pression et détermine un débit de fuite du bandage (12) ; et
un module de traitement ultérieur (76) ; dans lequel le module de traitement ultérieur (76), de manière opérationnelle, reçoit le débit de fuite du bandage (12) et analyse le débit de fuite du bandage (12) avec des déterminations à partir d'un certain nombre de conditions ; et
dans lequel le module de traitement ultérieur (76) déclenche une alerte de fuite (132) suite à l'analyse du débit de fuite du bandage (12) et sur base des déterminations à partir d'un certain nombre de conditions ;
**caractérisé en ce que** la gamme d'opérations englobe un module d'élimination de valeurs figées (144) qui détecte et élimine par filtration une valeur figée dans les données d'entrée (52).

15. Procédé selon la revendication 14, dans lequel le procédé est mis en œuvre d'une manière telle qu'il utilise un système modulaire pour la détection de fuites de pression d'un bandage en conformité avec au moins une des revendications 1 à 13.
